Europäisches Patentamt

(19) European Patent Office

Office européen des brevets

(11) Publication number: **0 099 920**
**B1**

(12) **EUROPEAN PATENT SPECIFICATION**

(45) Date of publication of patent specification: **10.09.86**

(51) Int. Cl.⁴: **G 09 B 7/06, A 63 F 9/18**

(21) Application number: **83900793.7**

(22) Date of filing: **10.02.83**

(86) International application number:
**PCT/GB83/00039**

(87) International publication number:
**WO 83/02842 18.08.83 Gazette 83/19**

(54) **TEACHING OR AMUSEMENT APPARATUS.**

(30) Priority: **10.02.82 GB 8203886**
**25.10.82 GB 8230363**

(43) Date of publication of application:
**08.02.84 Bulletin 84/06**

(45) Publication of the grant of the patent:
**10.09.86 Bulletin 86/37**

(84) Designated Contracting States:
**AT BE CH DE FR GB LI LU NL SE**

(56) References cited:
**US-A-3 662 078**

**Research Disclosure, no. 160, August 1977,
(Vants Hants, GB), "Printed documents and the
detection of markins there upon", page 60
IBM Technical Disclosure Bulletin, vol. 20, no.
6, November 1977 (New York, US), J.T. Powers,
Jr.: "Text publishing and reading aid for the
handicapped", pages 2421-2422**

(73) Proprietor: **PRICE/STERN/SLOAN PUBLISHERS,
INC.**
**410 North La Cienega Boulevard**
**Los Angeles, CA 90048 (US)**

(72) Inventor: **RIDDIFORD, Martin Phillip**
**78A Mordaunt Street**
**London SW9 (GB)**
Inventor: **FRAZER, Stephen Oliver**
**112A Brondesbury Villas**
**London NW6 6AD (GB)**

(74) Representative: **Gallafent, Richard John et al**
**GALLAFENT & CO. 8 Staple Inn**
**London WCIV 7QH. (GB)**

Courier Press, Leamington Spa, England.

## Description

This invention relates to teaching or amusement apparatus.

Quiz game apparatus is known in which a set of questions and answers are printed on a card with holes in. The card is overlaid on a sheet having a conductive pattern (e.g. a printed circuit board) and the user has some sort of apparatus with which it can be determined, e.g. by a light lighting up, which answer goes with which question. Such apparatus, although attractive for children, is relatively inflexible in operation, particularly having regard to the fixed geometrical relationship (determined by one conductive pattern) between the question and the correct answer.

United States Patent Specification 3662078 discloses a teaching machine including a cassette tape player and an answer book. In the answer book each answer sheet provides a number of answers for each question which is recorded on the tape, the right answer being printed in relatively electrically more conductive material than the wrong answers. By the use of a probe, connected to the advance motor of the tape player, the student is forced to find the right answer before he can hear the next question. Such apparatus is inflexible in operation, particularly as the questions are not in the same medium (printing on paper) as the answers.

We have now found that much more flexible teaching or amusement apparatus may be produced using certain known printing techniques, printing the questions and answers together on the same substrate and using infra-red absorption or reflectance properties of printing inks to discriminate.

Thus in accordance with the present invention, teaching or amusement apparatus comprising a substrate and printed intelligence on the substrate, the printed intelligence including a plurality of printed answer areas, at least one such area corresponding to a right answer and other areas corresponding to wrong answers, is characterised in that the printed intelligence on the substrate includes questions and that the answer areas juxtaposed to the questions are visually indistinguishable in terms of their infra-red absorption/reflectance properties but differ in such properties to enable discrimination between right and wrong answer areas by the use of an infra-red discrimination device.

Preferably the correct answer area or areas is/are printed in a highly infra-red absorptive printing ink, and the wrong answer areas in an infra-red transparent printing ink.

The invention also includes such apparatus including a hand held detector, the detector including a sensor head sensitive to infra-red radiation, and being adapted to be placed against the printed intelligence on the substrate to give a sense perceptible indication dependent on the infra-red properties of the portion of the printed intelligence against which it is placed, whereby to enable the user to differentiate the right answer area from the wrong answer areas on the basis of their non-visually distinguishable properties in the infra-red. The detector may be arranged to give a sense perceptible, preferably audible, indication of which sort of answer the sensor head is adjacent.

In a typical embodiment, the substrate is a sheet of paper, possibly forming part of a book or pamphlet and the printed intelligence is in the form of pictures and written words. Other substrates such as card or plastics may, however, be used. The substrate is usually flat, but need not be; for example, a map or landscape may be printed on a sheet of thermoplastics which is subsequently heat-formed to a bas-relief structure.

The printing may comprise a series of questions to test, for example, general knowledge, and juxtaposed to each such question a variety of printed answers, some wrong, one at least right. The printing of the answers varies, and the detector can distinguish between the right answer and the wrong ones. Each answer is effectively encoded in non-visually perceptible form to indicate whether it is correct or incorrect, so that when the detector is presented to the answer, a sense perceptible indication is given as to whether the answer is correct or not. The sense perceptible indication may be, for example, a light, a distinct tone or buzzer, or one of two distinguishable noises, e.g. a dull sound for a wrong answer and a bright sound for a correct one.

A significant advantage of the present invention is that printing on the substrate is generally very cheap and it is minimally expensive to take the trouble to print using inks of differing infra-red properties. A particularly convenient and cheap way of printing the substrate so that it is impossible visually to differentiate between right and wrong answers while enabling easy detection and discrimination between them is to print using four colour lithographic process printing, using the amount of black ink deposited as the variable on which the detector operates. The eye cannot distinguish between prints where part of the blackness arises from the simultaneous printing of yellow+cyan+magenta and those where part of the blackness results from printing with black ink. Since conventional yellow, cyan and magenta inks are infra-red transparent, and the carbon black in litho black inks is highly infra-red absorptive, easy discrimination between prints on infra-red reflective paper by an infra-red reflectance/absorption detector is possible.

Thus, the detector may be an infra-red "pen" comprising, e.g. an elongate tubular housing, an infra-red transmissive tip at one end of the housing, an infra-red emitter within the housing arranged to emit infra-red radiation from the tip of the housing, an infra-red detector within the housing arranged to be responsive to the intensity of the infra-red radiation emitted from the pen which is reflected back into the tip by a reflecting surface to which the tip of the pen is presented, circuit means to provide to a user of the pen a first indication if the detected intensity of infra-red radiation is below a predetermined threshold and a second indication if the intensity exceeds the threshold, and a suitable power supply, e.g. a battery. The pen may itself include all of these units, or may consist e.g. of two parts, a "pen" portion and a separate "control box" connected thereto by a wire, e.g. a flexible spiral lead.

Such a pen may be used in connection with a printed substrate by bringing the tip into contact with the relevant portion of the substrate. Preferably, the action of bringing the tip into contact with a substrate acts to switch on the circuit means, e.g. by arranging that the tip is movable and normally biassed to a position in which the circuit is switched off, and that on pressing the pen against the substrate, a suitable switch is operated. The whole pen tip may move relative to the body of the pen or, for example, the tip may incorporate an actuating pin mechanically connected to a switch.

The pen may be used simply as a detector by bringing it into contact with a test area of substrate and determining the result, e.g. by listening to an audible output. Alternatively, continuous detection across a plurality of areas on a substrate can be achieved by bringing the tip into contact with the substrate and then sliding it across its surface the indication emitted by the pen then changing as the pen is slid across the surface if the properties of the surface change sufficiently.

Thus, in the case of a simple printed quiz game, the pen may be brought into contact with one of a plurality of correct and incorrect answers printed on paper, or into contact with a colour patch printed over, under or next to each answer. It is very easy to print all the colour patches so that they are visually varied or identical but so that some only are differently reflective to infrared radiation, and so that any variation, e.g. in colour, does not correlate with e.g. intellectual "correctness" of the answer. Thus, the patches may be printed so that only that corresponding to the correct answer is rather less highly reflective to infrared radiation so that the intensity of radiation detected by the pen does not exceed the predetermined threshold and produces the second indication, typically a specific tone or buzz, or illumination of a light. Alternatively, one can work the other way round.

Such an infrared pen may, however be used by sliding it across a printed substrate in other types of game, e.g. it can be used in tracing games for following a printed path. If the infrared pen is not kept accurately on the path, an error indication may be provided as soon as the pen detects a change in the level of reflected infrared radiation, e.g. when the pen touches a printed area not on the path. The circuitry may include latching means causing the error indication to be maintained, so that, for example, the pen has then to be lifted off the substrate and replaced (e.g. at the beginning of a maze) by the user, who can then have another attempt. Such path-tracing apparatus can be useful in teaching hand and eye coordination, either to children learning it for the first time or as part of rehabilitation after accident or injury, or disease.

In an alternative, path games of this type may be used to teach spelling: A square grid may be filled with an array of letters and a picture of, for example, an elephant printed to one side of it. From a "start" position at one side of the grid, a path detectable with the pen, but not discernible to the eye of an illiterate, will pass through the letters E-L-E-P-H-A-N-T. Choice of an incorrect "next letter" will cause an error indication to be given.

In a particularly preferred embodiment, such a detector pen can discriminate between three ranges of infrared reflectance, so allowing 'path' and 'off path' areas to be indicated, and additionally allowing a "victory" or "success" signal to be emitted e.g. at the completion of a maze path, or a spelling path as described above.

The "pen" can be constructed in a normal pen shape as indicated above, or it can be disguised in some other form, e.g. a model car or animal having an emitter/detector device mounted on its underside.

The invention is illustrated, by way of example, with reference to the accompanying drawings in which:

Figure 1 shows an apparatus according to the invention and consisting of a detector and a printed substrate, the apparatus being shown in use;

Figure 2 shows an alternative apparatus in use;

Figure 3 shows a cross-section through one form of detector "pen";

Figure 4 is the circuit diagram of the detector pen of Figure 3;

Figure 5 is a perspective ghost view of an alternative detector;

Figures 6a, b and c are side, end and sectional views of the tip of the detector of Figure 5;

Figure 7 is a schematic circuit diagram of the detector of Figure 5;

Figure 8 is a block diagram for the main integrated circuit of the detector of Figure 7, and

Figure 9 is a complete circuit diagram showing the circuit of the integrated circuit of Figure 8.

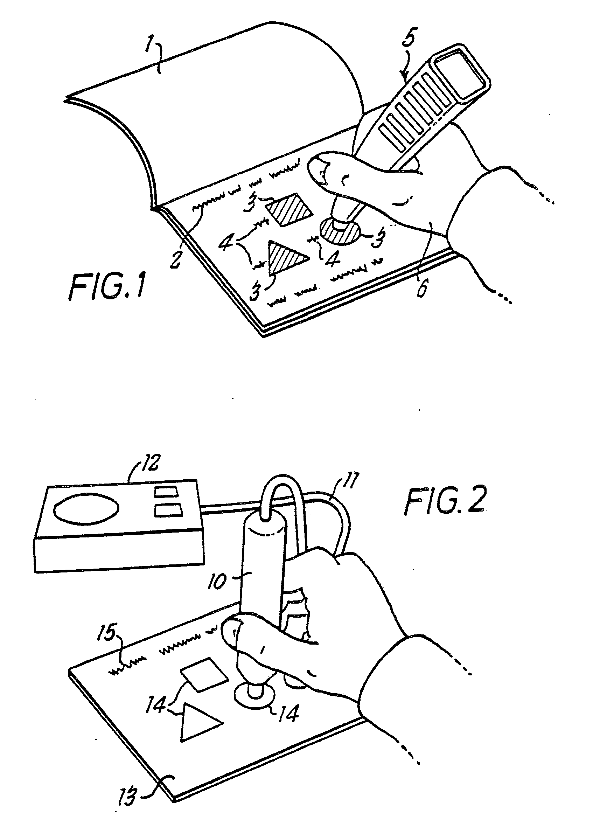

Referring to the drawings, Figure 1 shows a quiz book 1 having printed questions 2 on its pages. In this example a number of possible answers 4 are then given and next to each is a printed patch 3. The patches are printed on to the paper by the usual printing techniques and at the same time as the question. However, the printed patches have different responses to infrared radiation, although visually they can appear identical, or can be e.g. different colours but not with one colour correlating with "correct".

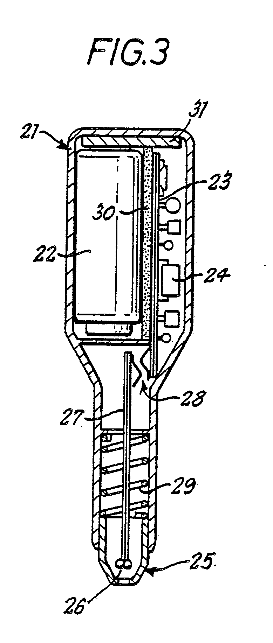

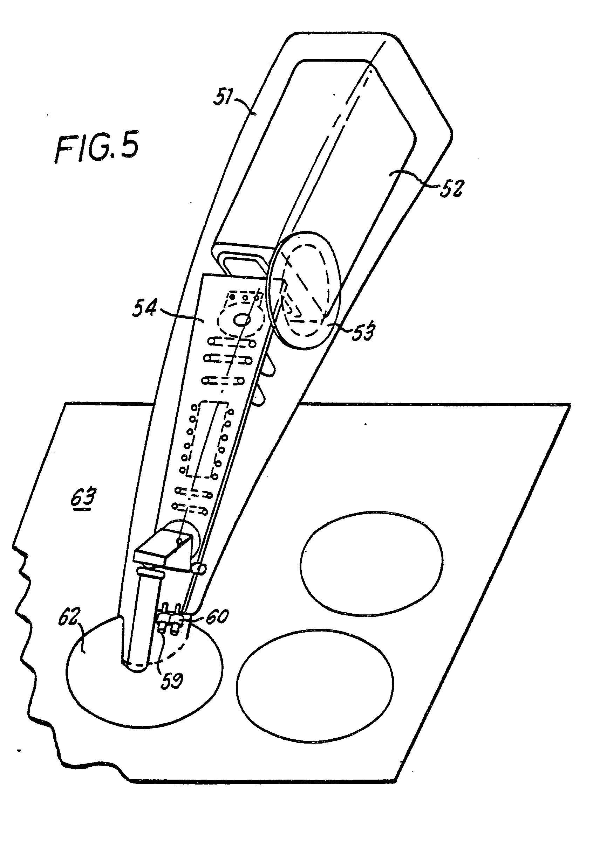

The quiz book 1 is used in conjunction with a detector pen 5 which can discriminate the different responses to infrared radiation. The user whose hand is denoted 6 places the tip of the pen on the patch adjacent what he thinks is the correct answer and the pen then gives an indication, preferably audible, of whether he has made the correct choice. Preferably the tip of the pen is spring-loaded or carries a spring-loaded contact so that only when the tip of the pen is pressed against the paper is the internal circuitry activated. This is explained in more detail below with reference to Figures 3 and 5. Of course, more than three choices may be possible, and some questions may have more than one right answer printed. The book may also be printed with path-tracking puzzles of hidden maze or spelling maze type as described above, or path-tracking games of skill in which the object of the exercise is to track the pen accurately around a sinuous track. The track is of different infrared response to the surrounding areas and accordingly using a detector pen of the type described in more detail below a user can determine whether or not he is on the track or not. This can provide amusement and teach hand and eye coordination. A hidden maze puzzle can consist of a tesselation of multi-coloured areas with a path through it defined by a different infrared reflectance. This path is not visible to the naked eye and can only be found with the pen. Since there is no eye visible indication of where the path was, trying to trace the path using the pen trains the memory. For such hidden maze games it is preferred to provide that the circuitry inside the pen latches the emitted signal if the user makes a false move until the pen is removed from the paper and a short period of time, e.g. one second, elapses. The hand movements necessary for writing may be taught by printing letters of the alphabet which can then be traced round to a continuous successful tone, which changes if the tracing is inaccurate.

The most convenient way of producing the printed substrate is by normal printing. Particularly for childrens books, colour printing is desirable and in the present invention four-colour lithographic process printing is the process of choice. This printing process enables in particular dark colours to be printed in one of two ways: either they are printed using a combination of cyan, yellow and magenta inks and no or substantially no black ink, or they may be printed using less of the coloured ink and more of the black. By careful control, it is possible to produce prints which look the same colour to the naked eye, but look very different at infrared wavelengths, i.e. the distinguishing criterion of infrared absorption is disguised by the presence of additionally indistinguishable (at non IR wavelengths) markings. The reason for this is that the human eye has a typical visible light response in the range of about 380 to 750 namometres, a peak response being at 500 to 600 nanometres. Semi-conductor infrared emitters and detectors have a peak spectral sensitivity generally in the region of 800 to 1,000 nanometres, and at these wavelengths black lithographic ink is absorptive.

Typical four-colour inks, conforming to European Standard 4666, are process red (magenta), process blue (cyan), yellow and black. The black is typically a carbon black with added prussian blue. We have found that the change in reflected IR-radiation between 0% and 20% black gives sufficient detector current change but allows bright similar looking colours to be retained. For example the following colours look similar to the naked eye but different to the IR photo-detector:

| Dark red: | black | 20% | black | 0% |
|---|---|---|---|---|
| | blue | 0% | blue | 20% |
| | magenta | 100% | magenta | 100% |
| | yellow | 40% | yellow | 40% |
| Fir Green: | black | 20% | black | 0% |
| | blue | 100% | blue | 100% |
| | yellow | 40% | yellow | 40% |
| | magenta | 0% | magenta | 20% |

If colour is not needed, printing using two black inks of different infrared reflectance may be used.

Figure 2 shows apparatus similar to that in Figure 1 but with a separate detector head 10 connected by a wire 11 to a box 12 containing the circuitry, which may be mains or battery powered. The detector head is used in conjunction with a work card 13 on which are printed patches 14 and text 15.

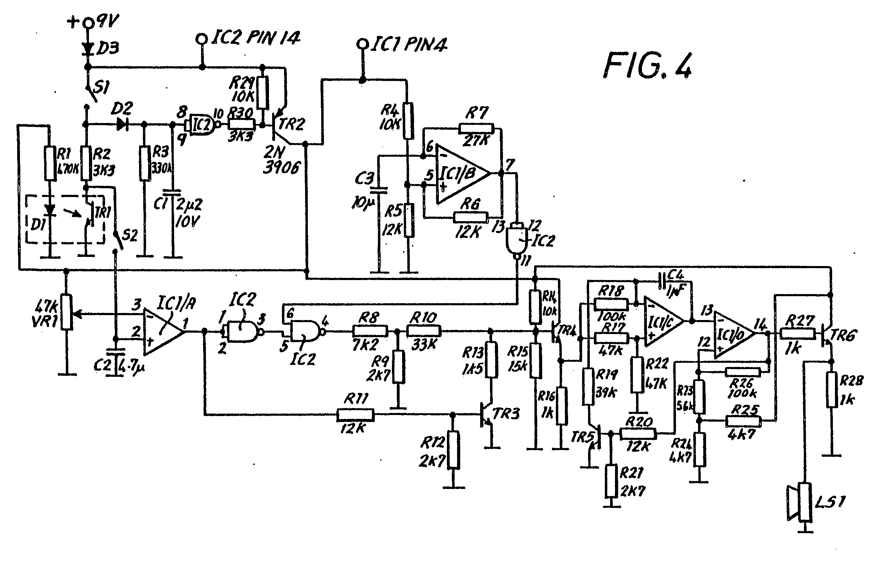

Referring to Figures 3 and 4, these show a cross-section through a detector pen and the circuitry thereof. The pen consists of a casing 21 housing a battery 22, a printed circuit board 23 with electronic components 24, and having a spring-loaded tip 25 including an assembly of infrared photo-emitter and photo-detector 26. The infrared elements are mounted on a second printed circuit board 27 which bears half of two pairs of contacts 28 the others being on the printed circuit board 23; they constitute switches S1 and S2 of Figure 4. Head 25 is biased downwardly as shown in Figure 3 by a spring 29. Battery 22 is maintained in its compartment secure from rattling by foam pad 30 and the top of the pen includes a piezo-electric audio transducer 31.

Then the pen is placed adjacent paper and pressed down, spring 29 is compressed, contacts 28 make and the circuitry is then activated to produce a perceptible tone from transducer 31. If the signal received by the infrared photo-detector is above a certain level, one sort of tone will be produced, if below it, a different sort.

The circuitry for effecting this is shown in Figure 4 and operates as follows:

D1 emits infrared radiation, a proportion of which is reflected back from the surface in contact with tip 25. The reflected infrared sets the voltage on the collector of TR1, which in turn causes the output of IC1/A to go either high or low dependant on the setting of VR1. TR1 is combined with D1 in a typical opto electronic package such as described in the AEG-TELEFUNKEN reference noted above. IC1 is an LM324N.

IC1/C and /D form a variable frequency oscillator whose output frequency is dependent on the voltage at the emitter of TR4. (Type 9014).

If IC1/A pin 1 is low, TR3 (also type 9014) is off and oscillator IC1/B switches the oscillator IC1/C and /D between two frequencies. If IC1/A pin 1 is high, TR3 is on; the oscillator IC1/B is inhibited by the action of the NAND gates (IC2 is CMOS 4011B) and the oscillator IC1/C and /D is controlled by the value of R13. The emitted signal is provided by a ceramic transducer LS1 via the circuitry shown. TR5 and TR6 are both type 9014.

When the pen is lifted from the surface, S2 breaks and C2 holds the voltage on the detector collector at IC1 pin 2. S1 then opens and R3/C1 holds on the supply to the unit for 1—2 seconds. Since TR1 is disconnected the unit thus holds the same state that existed when the tip 25 just breaks contact with the surface.

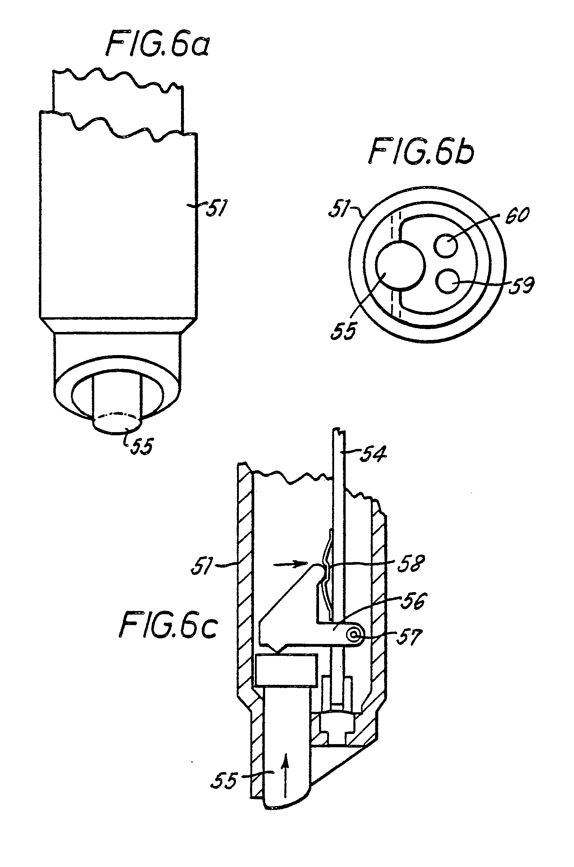

Figures 5 and 6 show an alternative and preferred detector pen construction. Referring to Figure 5, the pen consists of an outer casing 51 having mounted therein a battery 52, a piezo-electric transducer 53 and a printed circuit board 54. Slideably mounted in one end of the casing is an actuation pin 55 which protrudes just past the tip of casing 51. The tip of the casing is so shaped that the pen can be held at an angle as shown in Figure 5 or Figure 1. When so held, the actuation pin 55 moves slightly inwardly to lie flush with the end of the casing which then rests against the paper substrate or the like and this inward movement rotates a plastics block 56 which is pivotally mounted on the printed circuit board 54 at 57 and which actuates a spring diaphragm switch 58 on printed circuit board 54. This operates to energise the circuitry on the printed circuit board which in particular energises a combined emitter detector package which is mounted on the lower end of printed circuit board 54 which consists of a gallium arsenide infrared emitting diode 59 and a silicon phototransistor 60, commercially available under designations CQY36N and BPW16N respectively from AEG-Telefunken.

Depending on the infrared reflectance of the patch of material 62 on a substrate 63 onto which the pen is pressed, the circuitry on printed circuit board 54 causes an appropriate sound to issue from piezo-electric transducer 53.

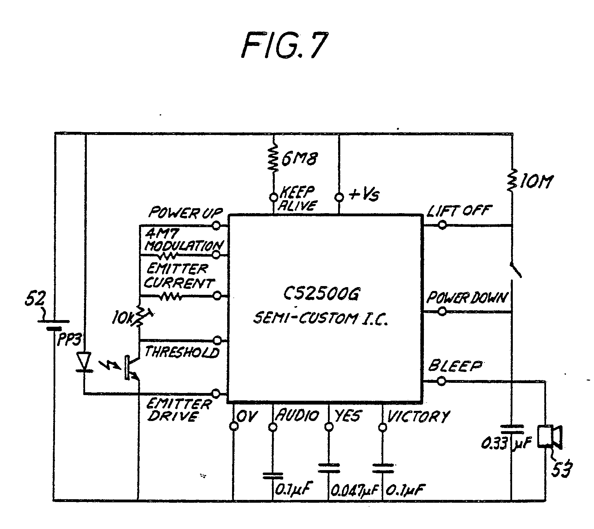

Referring now to the circuit diagrams of Figures 7, 8 and 9, these show the preferred circuitry for the pen shown in Figure 5.

The circuitry is designed to discriminate between three infrared absorption ranges, conveniently denoted low, medium and high and produce three corresponding audible indications. In the particular embodiment described, when patch 62 is printed by four-colour lithographic process printing, using conventional inks, low reflectance generally corresponds to a black ink proportion of less than 15% in the printed patch, medium reflection to proportions between 15 and 70% and high absorption to black ink proportions of greater than 70%. These are correlated in the embodiment shown with a negative indication, a low buzz of frequency about 70 Hz, a positive indication consisting of a 600 Hz tone modulated at about 5 Hz and a victory or success indication consisting of a whoop like sound. The pen is designed to continue to emit sound for about 1 second after it has been lifted from the substrate and it is also required to latch if either a negative or success audible signal is emitted, such latching being only removable by removal of the pen from the substrate.

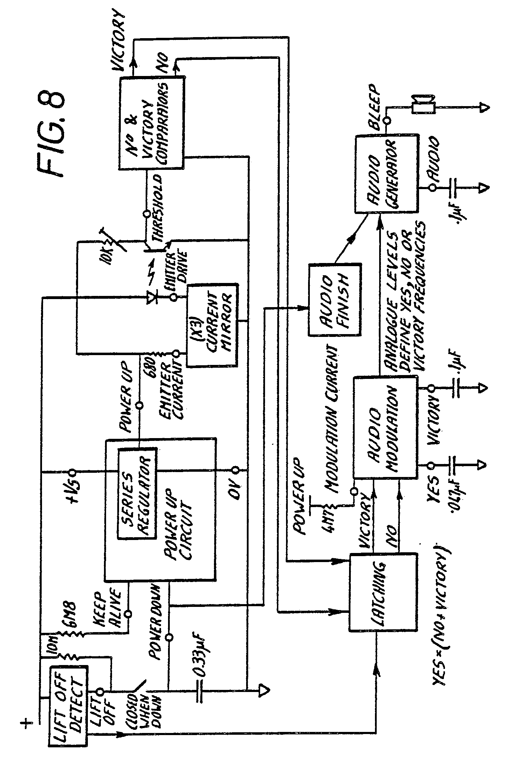

Figures 7 and 8 show in block diagram form the basic component circuitry. As is evident from Figure 7, the majority of the components are produced on a semi custom integrated circuit type CS2300G. This is mounted on printed circuit board 54 together with the four external capacitors and four external resistors indicated in Figure 7 and the combined package of infrared emitting diode and silicon photo-transistor shown. Of the discrete components, all are fixed value save for the 10K potentiometer which is used to compensate for variation in properties of the photo-transistor.

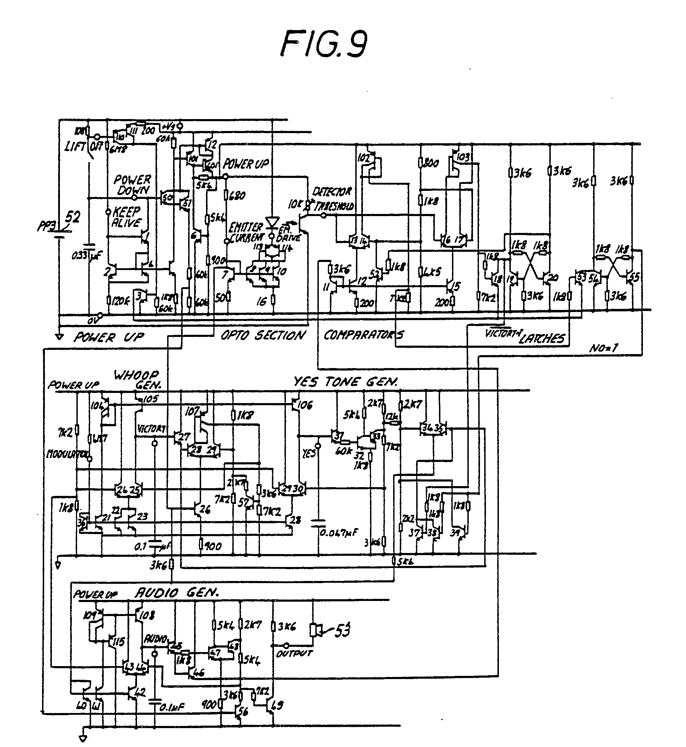

Referring now particularly to Figures 8 and 9, it can be seen that the circuit consists basically of five sections conveniently denoted power up, opto, comparators and latches, audio generation and tone generation as indicated on Figure 9. Figure 8 shows the basic circuit building blocks and how they are connected together and Figure 9 shows the full circuit. The various sections operate as follows:

a) Power up section

The power up circuit consists of transistors 1, 2, 4, 5, 101, 401 and 112. Transistors 1, 2 and 4 form a Wilson current mirror which needs the collector of 1 positive enough to avoid saturation, and when off with the 0.33 μF capacitor discharged, the transistors lose their gain factors and the voltage across the emitter resistor (120 K) drops to under 100 mV with 2—3 μA battery off current. When the switch is closed, the current mirror transistors pass essentially 1 μA through 2 and 4 into the 120 K, whose voltage jumps to above 200 mV, causing current amplification of about 40 into 5 with a drop across the 1 K8 emitter resistor of some 70 mV. The base current into 5 should be low compared with the 1 μA current feed of 4 so as to get repeatable discharge rates for powering down, which takes just over 1 second to discharge the 0.33 μF capacitor.

The current through 5 turns on 101, with some 10 μA required first for the 60 K base resistor. This turns on the large transistor 401, with about 80 μA required first to turn on the 5K4 base transistor. Transistor 112 protects against battery reversal. The power on level is kept essentially constant by transistor 6 plus the 5K4/900 potential divider, giving a $V_{be}$ dependent 5V approximately varying some 20 mV with battery voltage variation from 6.5 V to 11 V.

b) Opto section

The opto emitter current is set by the external 680 resistor together with a current mirror amplifier, stabilised further by the use of emitter resistors (transistors 7—10). PNPs 113 and 114 protect against battery reversal.

The opto detector transistor feeds the 10 K trimpot with current, and the voltage developed thus measures the degree of reflection. The internal reference of 800, 1K8 and 4K5 feed levels of approximately 2 V drop from power up to the no comparator and 0.6 V drop to the victory comparator.

c) Comparators and latches section

The no and victory comparators are current fed by a delayed action source to allow settling of the opto level before turning on the comparators, the source being conveniently from the audio section. The no comparator is formed by transistors 12, 13, 14 and 102, and victory by 15, 16, 17 and 103, with yes being the absence of no or victory signals. The comparators are standard types with operating currents of over 100 μA, giving sufficient signal across the 7K2 load on the PNP 2-collector mirror to turn on a transistor base.

Due to the latching requirement both when down and after lift off, latches may only be accessed when down, hence the lift off detect circuit formed by 110, 111 and 3, which is operated by the 1 μA current through Power down. This permits the latches to be accessed via 18 and 53 when the pen is down.

Latches are biassed on power up using the extra 3K6 base resistor to ground. The no latch is formed by transistors 54 and 55, and victory by transistors 19 and 20. As no cuts out yes and victory in the audio section, no feedback is necessary to the comparators to prevent subsequent yes or victory readings. However victory must stop a subsequent no by using transistor 52 to switch down the reference chain.

d) Audio generation section

The audio generation section responds to a current feed to produce a square wave to the piezo whose frequency is proportional to the input current.

A triangular waveform with the same up and down periods is developed across the audio capacitor. This is achieved by setting a current 1 in transistor 40 which is reflected through transistors 41, 42, 109, 108 and 115, and switched by transistors 43 and 44. The double collector of transistor 109 and single collector of transistor 108 reflects $\frac{1}{2}$I source current on to the capacitor (115 for Wilson mirror for better current feed). I sink current is switched through transistor 44 from the subsequent Schmitt, giving $\frac{1}{2}$I net sink when on and $\frac{1}{2}$I source when off, hence equal up and down rates of capacitor charge.

Transmitter 45 buffers the capacitor, and feeds a conventional Schmitt formed by transistors 47, 48 and 3 resistors. The potential divider from the Schmitt output then feeds transmitter 44, and the audio output transistor 49. Optimum results are achieved for equal mark space with a 1K8 emitter load on transistor 45.

Transistor 50 is for audio switchoff before power down. Transistors 50 and 51, the two 60 Ks and transistor 56 provide audio output when power down is above $4V_{be}$, hence as the power down capacitor ramps down after lift off audio comes off before power up, preventing unpleasant switchoff sounds. This leads to a delay of about 0.25 seconds with an audio hold on after lift off of about 1 second, after which the latches may be held to the previous reading to give a false reading if the pen is brought down too soon after the sound disappears. These periods occur as a ratio, and absolute values of both audio delay after lift off and modulation periods e.g. yes, are variable by outside components.

e) Tone generation section

Tone generation is achieved by setting voltage levels across resistors feeding the audio generator current mirror transistor 40.

The no background of 70 Hz continuous is obtained when yes and victory levels are switched out, and is provided from a $V_{be}$ voltage difference due to differing currents in transistors 7 and 40, across 3K6, with some additional 300 mV across the emitter resistor of transistor 7. This current flows continuously with power on.

The yes and victory levels are provided on the bases of transistors 34 and 35, fed via 5K4 to transistor 40. As victory is higher than yes, it is switched off during yes, so that victory is required from the victory latch.

Taking the yes tone generation first, a modulation current independent of battery volts is set into transistor 36, which requires an external 4m7 resistor due to the low capacitances and hence currents used. With I into transistor 36, the yes capacitor is alternately fed with ½I source and net sink currents, using current feeds 21, 104 (2 collector), 106 (1 collector), and 28 switched via 30, identical to the audio but with lower current. The Schmitt formed by transistors 32 and 33 is again the same circuit configuration as audio but with slightly changed resistors, particularly the additional network of 12 K, 2K7 and 2K2 to generate levels on the base of transistor 34 to give a minor third modulation.

The victory whoop section uses similar circuitry, but the net currents across the victory capacitor are ½I source and 1½I sink due to 21 generated by transistors 22 and 23. The schmitt range of hysteresis is increased by different circuit of comparator and switched reference (transistors 26—29, 107 and 57). The victory capacitor is buffered by transistor 27 and fed on to the base of transistor 35, and held low via transistor 37 for yes. When the victory latch switches over, there is a delay while the capacitor charges before the victory whoop occurs.

The pen just described is able to discriminate between three different reflectance ranges but the invention is by no means limited to such simple discrimination or to only three ranges. Circuitry may easily be designed, albeit of a more sophisticated nature, which discriminates between four or more different reflectance ranges, or which gives differing responses in response to a particular sequence of inputs. For example a success or victory response may only be generated following a certain sequence of reflectance values such as low, medium, high, medium, high, medium, low, high. This can be used for sophisticated maze or memory games.

In the embodiments described with respect to the drawings, the detector pen has only one type of output i.e. an audible output. However if desired the pen may have more than one type of output for example an audible output and a flashing light. As a further alternative, instead of automatic switching on and off by means of a movable head or actuating pin, the detector pen may have a manually operated on/off switch.

## Claims

1. Teaching or amusement apparatus comprising a substrate (1), printed intelligence (3, 4) on the substrate, the printed intelligence including a plurality of printed answer areas (3, 4), at least one such area corresponding to a right answer, and other areas corresponding to wrong answers, characterised in that the printed intelligence on the substrate includes questions (2) and the answer areas (3, 4) are juxtaposed to the questions (2) and visually indistinguishable in terms of their infra-red absorption/reflectance properties but differ in such properties to enable discrimination between right and wrong answer areas by the use of an infra-red discrimination device (5).

2. Apparatus according to claim 1 characterised in that the correct answer area is printed in a highly infra-red absorptive printing ink, and the wrong answer areas in an infra-red transparent printing ink.

3. Apparatus according to claim 1 or 2 and comprising a hand-held detector (5, 10) including a sensor head sensitive to infra-red radiation and adapted to be placed against the printed intelligence on the substrate and to give a sense perceptible indication dependent on the infra-red properties of the portion of the printed intelligence against which it is placed whereby to enable a user to differentiate the right answer area from the wrong answer areas on the basis of their non-visually distinguishable properties in the infra-red.

4. Apparatus according to claim 3 wherein the substrate is printed using multicolour lithographic process printing, and characterised in that the detector is set to detect and discriminate between print having less than a given level of black ink therein and print having a level of black ink greater than the given level.

5. Apparatus according to claim 3 wherein the detector discriminates between three ranges of infra-red absorption.

6. Apparatus according to any one of claims 3 to 5 wherein the detector includes latching means latching a given sense perceptible indication for a given period of time after the detector has been removed from a position against the printed intelligence.

## Patentansprüche

1. Lehr- oder Unterhaltungsvorrichtung mit einer Substratfläche (1) und auf der Substratfläche aufgedruckten Informationen (3, 4), die aus einer Vielzahl von aufgedruckten Antwortflächen (3, 4) bestehen, von denen mindestens eine solche Fläche einer richtigen Antwort und die anderen Flächen falschen Antworten zugeordnet sind, dadurch gekennzeichnet, daß die aufgedruckten Informationen auf der Substratfläche Fragen (2) enthalten und die Antwortflächen (3, 4) sich neben den Fragen (2) befinden und hinsichtlich ihres Infrarot-Absorptions-/Reflexionsvermögens visuell nicht zu unterscheiden sind, sich jedoch in solchen Eigenschaften unterscheiden, die eine Unterscheidung zwischen Richtig- und Falschantwort-Fläche durch die Verwendung einer Infrarot-Unterscheidungsvorrichtung (5) ermöglichen.

2. Vorrichtung nach Anspruch 1, dadurch gekennzeichnet, daß die Richtigantwort-Fläche mit einer starke infrarot-absorptionsfähigen Druckfarbe gedruckt ist und die Falschantwort-Flächen mit einer infrarot-durchlässigen Druckfarbe.

3. Vorrichtung nach Anspruch 1 oder 2, gekennzeichnet durch einen in der Hand zu haltenden Detektor (5, 10) mit einem für Infrarotstrahlen empfindlichen Sensorkopf, der dazu geeignet ist, auf die gedruckten Informationen auf der Substratfläche gehalten zu werden und in Abhängigkeit von den Infraroteigenschaften des Teils der aufgedruckten Informationen, gegen den er gehalten wird, eine sinneswahrnehmbare Anzeige zu geben und hierdurch einen Benutzer zu befähigen, die Richtigantwort-Fläche von den Falschantwort-Flächen auf der Basis ihrer visuell nicht wahrzunehmenden Infraroteigenschaften zu unterscheiden.

4. Vorrichtung nach Anspruch 3, wobei die Substratfläche im Mehrfarben-Lithographie-Druckverfahren gedruckt ist, dadurch gekennzeichnet, daß der Detektor geeignet ist zum Anzeigen und Unterscheiden zwischen Druck mit weniger als einem vorgegebenen Anteil schwarzer Farbe und Druck mit einem Anteil schwarzer Farbe, der größer als der vorgegebene Anteil ist.

5. Vorrichtung nach Anspruch 3, dadurch gekennzeichnet, daß der Detektor zwischen drei Bereichen von Infrarot-Absorption unterscheidet.

6. Vorrichtung nach einem der Ansprüche 3 bis 5, dadurch gekennzeichnet, daß der Detektor Haltemittel aufweist, die eine gegebene sinneswahrnehmbare Anzeige für eine vorgegebene Zeitdauer nach Entfernen des Detektors aus einer gegen die gedruckte Information gehaltenen Stellung aufrechterhält.

**Revendications**

1. Appareil d'enseignement ou d'amusement comprenant un substrat (1), des informations imprimées (3, 4) sur le substrat, les informations imprimées comprenant une pluralité de zones de réponses imprimées (3, 4), au moins une telle zone correspondant à une réponse correcte, et d'autres zones correspondant à des réponses erronées, caractérisé en ce que les informations imprimées sur le substrat comprennent des questions (2) et les zones de réponses (3, 4) sont juxtaposées aux questions (2) et sont visuellement indistingables en ce qui concerne leurs propriétés d'absorption/réflexion d'infrarouges mais diffèrent en ce qui concerne lesdites propriétés de façon à permettre une discrimination entre des zones de réponses correctes et erronées par l'utilisation d'un dispositif de discrimination d'infrarouges (5).

2. Appareil selon la revendication 1, caractérisé en ce que la zone de réponse correcte est imprimée avec une encre d'impression très absorbante des infrarouges tandis que les zones de réponses erronées sont imprimées avec une encre d'impression transparente aux infrarouges.

3. Appareil selon la revendication 1 ou 2 et comprenant un détecteur (5, 10) tenu à la main et pourvu d'une tête détectrice sensible à un rayonnement infrarouge, et adaptée pour être placée contre les informations imprimées se trouvant sur le substrat et à produire une indication perceptible sensoriellement en fonction des propriétés de sensibilité aux infrarouges de la partie de l'information imprimée contre laquelle elle est placée, de manière à permettre à un utilisateur d'établir une différence entre la zone de réponse correcte et les zones de réponses erronées sur la base de leurs propriétés non-visuellement distingables dans le rayonnement infrarouge.

4. Appareil selon la revendication 3, dans lequel le substrat est imprimé en utilisant un procédé d'impression lithographique en couleurs multiples, et caractérisé en ce que le détecteur est réglé de manière à détecter et faire la discrimination entre une partie imprimée ayant un niveau d'encre noire inférieur à une valeur donnée et une partie imprimée ayant un niveau d'encre noire supérieur au niveau donné.

5. Appareil selon la revendication 3, dans lequel le détecteur établit une discrimination entre trois gammes d'absorption de rayonnement infrarouge.

6. Appareil selon une quelconque des revendications 3 à 5, dans lequel le détecteur comprend un moyen de verrouillage pour verrouiller une indication perceptible sensoriellement donnée pendant une période de temps donnée après que le détecteur a été enlevé d'une position d'application contre l'information imprimée.

FIG.1

FIG.2

# FIG.3

FIG. 4

FIG.5

## FIG.6a

## FIG.6b

51

60

55

59

55

54

51

58

56

57

## FIG.6c

55

# FIG.7

FIG. 8

0 099 920

# FIG.9